# EUROPEAN PATENT SPECIFICATION

(11) **EP 1 465 943 B1**
(45) Date of publication and mention of the grant of the patent: **14.01.2009**
(21) Application number: 02792865.4
(22) Date of filing: 03.12.2002
(51) Int. Cl.: C08K 5/00

(54) **FLAME RETARDANT CONPOSITIONS**
FLAMMHEMMENDE ZUSAMMENSETZUNGEN
COMPOSITIONS IGNIFUGEANTES

(30) Priority: 10.12.2001 US 339099 P; 07.10.2002 US 416625 P
(43) Date of publication of application: 13.10.2004
(73) Proprietor: Ciba Holding Inc., 4057 Basel (CH)
(72) Inventor: CAPOCCI, Gerald, Anthony, Greenwich, CT 06831 (US); LELLI, Nicola, New York, NY 10023 (US); ZINGG, Jürg, CH-4153 Reinach (CH); KAPRINIDIS, Nikolas, New York, NY 10001 (US); KING, Roswell, Easton, Pleasantville, NY 10570 (US)
(86) International application number: PCT/EP2002/013664
(87) International publication number: WO 2003/050175

(56) References cited:
- EP-A- 1 038 912
- WO-A-99/00450
- US-A- 5 844 026
- SRINIVASAN R ET AL: "A REVOLUTIONARY UV STABLE FLAME RETARDANT SYSTEM FOR POLYOLEFINS" INTERNATIONAL CONFERENCE ON ADDITIVES FOR POLYOLEFINS, XX, XX, 1998, pages 69-83, XP001147531

## Description

The instant invention pertains to a novel method of flame retarding a polymeric substrate by adding thereto an effective flame retarding amount of a synergistic mixture of at least one low molecular weight sterically hindered alkoxyamine, at least one high molecular weight sterically hindered alkoxyamine and at least one conventional flame retardant.

The instant invention also pertains to polyolefin molded articles that are stabilized against light, heat and oxygen and made flame retardant with the incorporation therein of at least one sterically hindered alkoxyamine and at least one conventional flame retardant, while allowing normally high levels of flame-retardant fillers to be greatly reduced or eliminated.

### Background of the Invention

U.S. Pat. No. 5,096,950 discloses the co-use of certain NOR (N-alkoxy) hindered amines with a brominated Sb₂O₃-containing flame retardant in polypropylene.

U.S. Pat. No. 5,393,812 discloses polyolefin compositions which are made flame retardant by a combination of a halogenated hydrocarbyl phosphate or phosphonate ester flame retardant in combination with a alkoxyamine functional hindered amine.

U.S. Pat. No. 5,844,026 discloses polyolefin compositions comprising certain NOR hindered amines and certain traditional flame retardants.

U.S. Pat. No. 6,117,995 discloses that certain N-alkoxy hindered amines may be used as flame retardants for organic polymers.

U.S. Pat. No. 6,271,377 discloses polyolefin compositions that comprise N-hydroxyalkoxy hindered amines and a halogenated flame retardant.

U.S. Pat. No. 6,309,987 and equivalent WO 99/54530 teach polyolefin non-woven flame retardant fabrics that comprise N-alkoxyamines.

U.S. Pat. No. 6,262,161 discloses random interpolymers, for example polymers of ethylene and/or one or more α-olefin monomers with one or more vinyl aromatic monomers, with improved ignition resistance that comprises a filler and at least one other component which may be a hindered amine stabilizer.

A Revolutionary UV Stable Flame Retardant System for Polyolefins - R. Srinivasan, A. Gupta and D. Horsey, Int. Conf. Addit. Polyolefins 1998, 69-83, teaches polyolefins comprising certain NOR hindered amines with halogen and phosphorus containing traditional flame retardants.

Advances in a Revolutionary Flame Retardant System for Polyolefins - R. Srinivasan, B. Rotzinger, Polyolefins 2000, Int. Conf. Polyolefins 2000, 571-581, teaches polyolefins comprising certain NOR hindered amines with brominated and phosphorus containing flame retardants.

N. Kaprinidis and R. King, in an abstract posted on the Society of Plastics Engineers website, posted Sep. 2001, discuss the use of NOR hindered amines as flame retardants in polyolefins. The abstract is for a paper submitted to the Polymer Modifiers and Additives Division subsection to be presented at the Polyolefins 2002 conference in Houston, TX, Feb. 24, 2002. The website is www.PMAD.org.

EP 0792911 A2, discloses polyolefin compositions that comprise alkoxyamine functional hindered amines and tris(trihalogenopentyl) phosphate flame retardants.

WO 99/00450, copending U.S. application Nos. 09/502,239, filed Nov. 3, 1999, and 09/714,717, filed Nov. 16, 2000, disclose the use of certain N-alkoxy hindered amines as flame retardants.

EP 1038912 discloses specific hydrocarbyloxy hindered amine compounds as flame retardants.

Research Disclosure, Sept. 2000, No. 437087, June 2000, No. 434095 and Dec. 2000, No. 440128 also disclose the efficacy of certain hydrocarbyloxy hindered amine compounds as flame retardants.

The flame retardant (FR) market today is comprised of products which function to interfere with the combustion process by chemical and/or physical means. Mechanistically these FRs have been proposed to function during combustion of an article in either the gas phase, the condensed phase or both. The organohalogens are proposed to generate halogen species (e.g. HX) which interferes in the gas phase with free radical organic "fuel" from the polymer substrate. Synergists are proposed to react with HX to form additional chemical species which interfere with combustion in the gas phase, such as reaction of antimony oxide with HX to form antimony halide and water vapor. Antimony compounds such as antimony trioxide also act as a radical scavenger forming antimony halides. Thus, it can inhibit the propagation of the fire.

Although antimony compounds are efficient in terms of cost performance, it recently raised a lot of concern because of the toxicity of the byproducts which are formed during combustion in the presence of a halogenated flame retardant. Antimony oxides often contain trace amounts of arsenic compounds which are suspected carcinogens. Because of these ecological concerns, there is a motion to replace antimony trioxide in the present commercial flame retardant applications. However, it is very difficult to find an effective synergist which is both enviromentally friendly and efficient as far as the cost performance is concerned.

Another reason to add flame retardant additives is to prevent dripping during the application of the fire. Dripping during combustion is the process of the separation of parts of the polymer from the matrix in the shape of droplets. Most often, the droplets are flaming and are imposing tremendous danger for fire spread. It is a common measure to add fillers such as talc in large amounts to the polymer, with some negative consequences on the mechanical properties. Fillers sometimes used include calcium carbonate, magnesium carbonate, zinc borate, silicates, silicones, glass fibres, glass bulbs, asbestos, kaolin, mica, barium sulfate, calcium sulfate, metal oxides, hydrates and hydroxides such as zinc oxide, magnesium hydroxide, alumina trihydrate, silica, calcium silicate and magnesium silicate.

It has been found that polymers with good flame retardant properties are prepared when a low molecular weight sterically hindered alkoxyamine and a high molecular weight sterically hindered alkoxyamine is added thereto together with a conventional flame retardant. Conventional flame retardants are for example organohalogen flame retardants. With this combination, antimony compounds and flame-retardant fillers or conventional fillers may be largely reduced or replaced. As the instant alkoxyamine compounds are active as stabilizers, the polymer compositions of the invention are efficiently protected from the deleterious effects of light, oxygen and/or heat.

### Detailed Disclosure

The instant invention pertains to a flame retardant composition which comprises
(A) A thermoplastic polymer substrate and
(B) An effective flame retarding amount of a synergistic mixture of
   (i) At least one low molecular weight sterically hindered alkoxyamine stabilizer selected from the group consisting of
      1-Cyclohexyloxy-2,2,6,6-tetramethyl-4-octadecylaminopiperdine;
      bis(1-Octyloxy-2,2,6,6-tetramethylpiperidin-4-yl) sebacate;
      2,4-bis[(1-Cyclohexyloxy-2,2,6,6-tetramethylpiperidin-4-yl)butylamino]-6-(2-hydroxyethylamino-s-triazine;
      bis(1-Cyclohexyloxy-2,2,6,6-tetramethylpiperidin-4-yl) adipate;
      2,4-bis[(1-Cyclohexyloxy-2,2,6,6-tetramethylpiperidin-4-yl)butylamino]-6-chloro-s-triazine;
      1-(2-Hydroxy-2-methylpropoxy)4-hydroxy-2,2,6,6-tetramethylpipeidine;
      1-(2-Hydroxy-2-methylpropoxy)-4-oxo-2,2,6,6-tetramethylpiperdine;
      1-(2-Hydroxy-2-methylpropoxy)-4-octadecanoyloxy-2,2,6,6-tetramethylpiperidine;
      bis(1-(2-Hydroxy-2-methylpropoxy)-2,2,6,6-tetramethylpiperidin-4-yl) sebacate;
      bis(1-(2-Hydroxy-2-methylpropoxy)-2,2,6,6-tetramethylpiperidin-4-yl) adipate; and
      2,4-bis{N-[1-(2-Hydroxy-2-methylpropoxyy2,2,6,6-tetramethylpipeddin-4-yl]-N-butgamino}-6-(2-hydroxyethyamino)-s-triazine;
   (ii) At least one high molecular weight sterically hindered alkoxyamine stabilizer selected from the group consisting of
      The reaction product of 2,4-bis[(1-cyclohexyloxy-2,2,6,6-piperdin-4-yl)butylamino]-6-chloro-s-triazine with N,N'-bis(3-aminopropyl)ethylenediamine) and
      The compound of formula 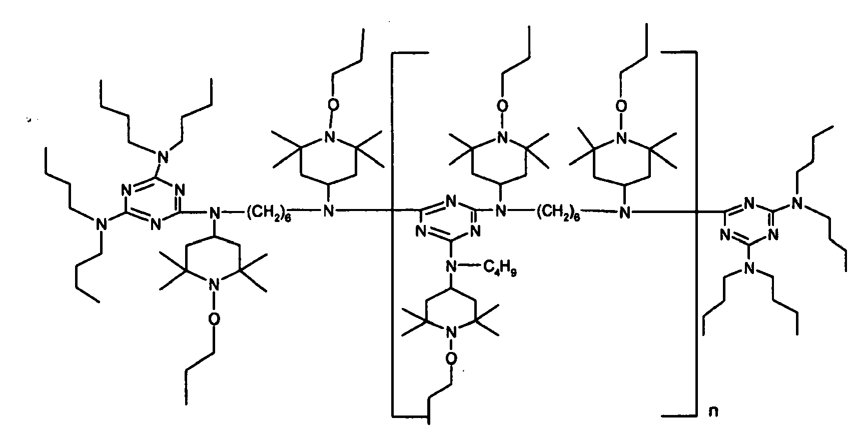 in which n is from 1 to 15;
   (iii) At least one conventional flame retardant selected from the group consisting of
      Chloroalkyl phosphate esters,
      Polybrominated diphenyl oxide,
      Decabromodiphenyl oxide,
      tris[3-Bromo-2,2-bis(bromomethyl)propyl] phosphate,
      bis(2,3-Dibromopropyl ether) of bisphenol A,
      Brominated epoxy resin,
      Ethytene-bis(tetrabromophthalimide),
      bis(Hexachlorocyclopentadieno)cyclooctane,
      Chlorinated paraffins,
      1,2-bis(Tribromophenoxy)ethane,
      Tetrabromo-bisphenol A,
      Ethylene bis-(dibromo-norbornanedicarboximide),
      bis-(Hexachlorocyclopentadieno) cyclooctane,
      tris-(2,3-Dibromopropyl)-isocyanurate,
      Ethylene-bis-tetrabromophthalimide,
      Triphenyl phosphate,
      Ammonium polyphosphate,
      Resorcinol diphosphate oligomer,
      Melamine phosphates,
      Melamine pyrophosphates and
      Ethylenediamine diphosphate.

Advantageously, present composition contains only minor amounts of antimony compounds such as Sb₂O₃, e.g. less than about 1%, for instance less than about 0.1 % by weight of the polymer component A; for example, the present compositions are essentially free of antimony.

Flame-retardant fillers are not required in order to improve the flame retardant properties and achieve a higher rating, e.g. in the UL-94 burning test (*infra*). Consequently, the compositions of the present invention may contain only minor amounts of flame-retardant fillers, e.g. less than about 3%, for instance less than about 1%, for example less than about 0.1% by weight of the polymer component A; for example, the present compositions are essentially free of flame-retardant fillers.

Flame-retardant fillers are known in the art and are selected from the group consisting of magnesium hydroxide, alumina trihydrate and zinc borate. Flame-retardant fillers are inorganic compounds employed for flame-retardant properties, and at high enough levels to be considered "filler".

If conventional fillers such as talc, calcium carbonate and the like are normally employed for instance for flow properties in order to reduce the spread of flaming droplets (not flame-retardant per se), such conventional fillers may also be reduced with the use of the present compositions. For instance, the present compositions may contain only minor amounts of conventional fillers, for example less than about 3%, for instance less than 1%, for example less than about 0.1 % by weight of the polymer component A; for example, the present compositions are essentially free of conventional fillers.

Further, the present invention allows for conventional fillers to take the place of more expensive flame-retardant fillers.

The polymeric substrate of component (A) is any of a wide variety of polymeric types including polyolefins, polystyrenics, and PVC. For example, the polymer substrate may be selected from the group of resins consisting of the polyolefins, the thermoplastic olefins, styrenic polymers and copolymers, ABS and polymers which contain hetero atoms, double bonds or aromatic rings. Specific embodiments are where component (A) is polypropylene, polyethylene, thermoplastic olefin (TPO), ABS or high impact polystyrene.

For example, the polymer substrate is selected from the group of resins consisting of the polyolefins, the thermoplastic olefins, styrenic polymers and copolymers, and ABS.

Another embodiment of the present invention is where the thermoplastic polymer substrate is selected from the group consisting of polypropylene, polyethylene, thermoplastic olefin (TPO), ABS and high impact polystyrene.

For instance, the thermoplastic polymer substrate is polypropylene, polyethylene or thermoplastic olefin (TPO). Organic polymers of component A are for example thermoplastic polymers such as polyolefins like polyethylene, polypropylene or copolymers thereof. The thermoplastic polymer is for example polypropylene.

Further examples for organic polymers (component A) are:
1. Polymers of monoolefins and diolefins, for example polypropylene, polyisobutylene, polybut-1-ene, poly-4-methylpent-1-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, for example polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, Vlb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups la, Ila and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethyleneacrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch. Homopolymers and copolymers from 1.) - 4.) may have any stereostructure including syndiotactic, isotactic, hemi-isotactic or atactic; for example atactic polymers. Stereoblock polymers are also included.
5. Polystyrene, poly(p-methylstyrene), poly(α-methylstyrene).
6. Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; for example atactic polymers. Stereoblock polymers are also included.
   6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/styrene.
   6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
   6c. Hydrogenated aromatic polymers derived from hydrogenation of polymers mentioned under 6a.).
   Homopolymers and copolymers may have any stereostructure including syndiotactic, isotactic, hemi-isotactic or atactic; for example atactic polymers. Stereoblock polymers are also included.
7. Graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from a,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or polym-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS.
19. Polycarbonates and polyester carbonates.
20. Polyketones.
21. Polysulfones, polyether sulfones and polyether ketones.
22. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.

### Sterically Hindered Alkoxyamine Stabilizers of Components (i) and (ii)

The present sterically hindered alkoxyamine stabilizers of components (i) and (ii) are defined similarly; that is they have the same structural definitions and are distinguished by their molecular weight. The low molecular weight stabilizers of component (i) have a molecular weight of between about 200 to about 1000 g/mol. The high molecular weight stabilizers of component (ii) have a molecular weight between about 1200 and about 10,000 g/mol.

The hindered alkoxyamine stabilizers of components (i) and (ii) are well known in the art, also known as N-alkoxy hindered amines and NOR hindered amines or NOR hindered amine light stabilizers or NOR HALS.

They are disclosed for example in U.S. Pat. Nos. 5,004,770, 5,204,473, 5,096,950, 5,300,544, 5,112,890, 5,124,378, 5,145,893, 5,216,156, 5,844,026, 6,117,995, 6,271,377, and U.S. application Ser. Nos. 09/505,529, filed Feb. 17, 2000, 09/794,710, filed Feb. 27, 2001, 09/714,717, filed Nov. 16, 2000, 09/502,239, filed Nov. 3, 1999 and 60/312,517, filed Aug. 15, 2001.

U.S. Pat. No. 6,271,377, and U.S. application Ser. Nos. 09/505,529, filed Feb. 17, 2000, and 09/794,710, filed Feb. 27, 2001, cited above disclose hindered hydroxyalkoxyamine stabilizers. For the purposes of this invention, the hindered hydoxyalkoxyamine stabilizers are considered a subset of the hindered alkoxyamine stabilizers and are part of present components (i) and (ii). Hindered hydroxyalkoxyamine stabilizers are also known as N-hydroxyalkoxy hindered amines, or NORoI HALS.

The low molecular weight hindered amines of component (i) are
NOR1 1-cyclohexyloxy-2,2,6,6-tetramethyl-4-octadecylaminopiperidine;
NOR2 bis(1-octyloxy-2,2,6,6-tetramethylpiperidin-4-yl) sebacate;
NOR3 2,4-bis[(1-cyclohexyloxy-2,2,6,6-tetramethylpiperidin-4-yl)butylamino]-6-(2-hydroxyethylamino-s-triazine;
NOR3 bis(1-cyclohexyloxy-2,2,6,6-tetramethylpiperidin-4-yl) adipate;
NOR4 2,4-bis[(1-cyclohexyloxy-2,2,6,6-piperidin-4-yl)butylamino]-6-chloro-s-triazine;
NOR5 1-(2-hydroxy-2-methylpropoxy)-4-hydroxy-2,2,6,6-tetramethylpiperidine;
NOR6 1-(2-hydroxy-2-methylpropoxy)-4-oxo-2,2,6,6-tetramethylpiperidine;
NOR7 1-(2-hydroxy-2-methylpropoxy)-4-octadecanoyloxy-2,2,6,6-tetramethylpiperidine;
NOR8 bis(1-(2-hydroxy-2-methylpropoxy)-2,2,6,6-tetramethylpiperidin-4-yl) sebacate;
NOR9 bis(1-(2-hydroxy-2-methylpropoxy)-2,2,6,6-tetramethylpiperidin-4-yl) adipate; and
NOR10 2,4-bis{N-[1-(2-hydroxy-2-methylpropoxy)-2,2,6,6-tetramethylpiperidin-4-yl]-N-butylamino}-6-(2-hydroxyethylamino)-s-triazine.

The high molecular weight compounds of present component (ii) are:
NOR11 the reaction product of 2,4-bis[(1-cyclohexyloxy-2,2,6,6-piperidin-4-yl)-butylamino]-6-chloro-s-triazine with N,N'-bis(3-aminopropyl)ethylenediamine) [CAS Reg. No. 191680-81-6]; and
NOR12 the compound of formula 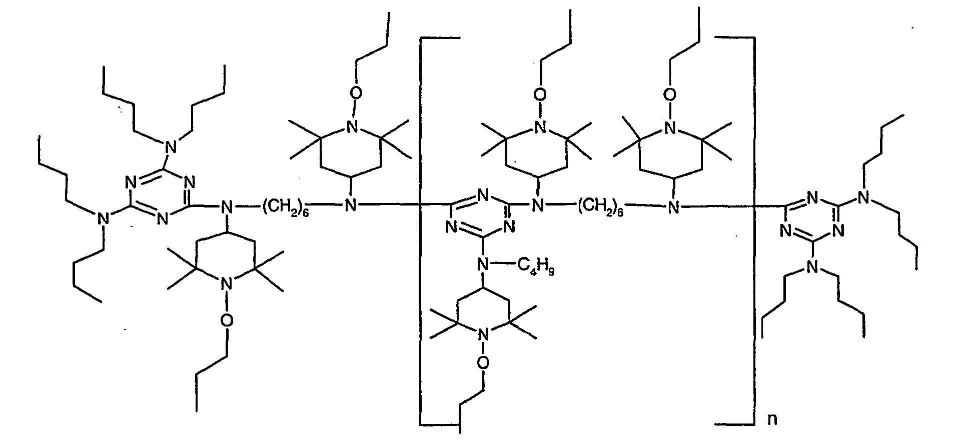
in which n is from 1 to 15.

Compound NOR12 is disclosed in example 2 of U.S. Patent No. 6,117,995.

Components (i) and (ii), in total, are advantageously contained in the composition of the invention in an amount from about 0.05 to about 20% by weight based on the polymer substrate (A); for example from about 0.1 to about 10% by weight; for example from about 0.2 to about 8% by weight; for instance from about 0.5 to about 3% by weight.

Components (i) and (ii) are employed in a weight ratio of (i) : (ii) of from about 1:100 to about 100:1, for example from about 1:20 to about 20:1, for instance from about 1:10 to about 10:1, or from about 1:5 to about 5:1, or from about 4:1 to about 1:4, or from about 3:1 to about 1:3, or from about 2:1 to about 1:2.

### Conventional Flame Retardants of Component (iii)

The halogenated flame retardant (iii) is selected from the following compounds:
Chloroalkyl phosphate esters (ANTIBLAZE^{®} AB-100, Albright & Wilson; FYROL^{®} FR-2, Akzo Nobel),
polybrominated diphenyl oxide (DE-60F, Great Lakes Corp.),
decabromodiphenyl oxide (DBDPO; SAYTEX^{®} 102E),
tris[3-bromo-2,2-bis(bromomethyl)propyl] phosphate (PB 370^{®}, FMC Corp.),
bis(2,3-dibromopropyl ether) of bisphenol A (PE68),
brominated epoxy resin,
ethylene-bis(tetrabromophthalimide) (SAYTEX^{®} BT-93),
bis(hexachlorocyclopentadieno)cyclooctane (DECLORANE PLUS^{®}),
chlorinated paraffins,
1,2-bis(tribromophenoxy)ethane (FF680),
tetrabromo-bisphenol A (SAYTEX^{®} RB100),
ethylene bis-(dibromo-norbornanedicarboximide) (SAYTEX^{®} BN-451),
bis-(hexachlorocyclopentadieno) cyclooctane,
tris-(2,3-dibromopropyl)-isocyanurate,
ethylene-bis-tetrabromophthalimide.

The conventional phosphorus containing flame retardants of component (iii) are for example:
triphenyl phosphate,
ammonium polyphosphate (APP) or (HOSTAFLAM^{®} AP750),
resorcinol diphosphate oligomer (RDP) and
ethylenediamine diphosphate (EDAP).

The melamine based flame retardants are for example:
melamine cyanurate,
melamine borate,
melamine, phosphates,
melamine polyphosphates and
melamine pyrophosphates.

A component (iii) of specific technical importance are tris[3-bromo-2,2-bis(bromomethyl)-propyl] phosphate.

Component (iii) is advantageously contained in the composition of the invention in an amount from about 0.5 to about 45% by weight of the polymeric substrate (A); for instance about 3 to about 40%; for example about 5 to about 35% by weight of component (A).

The ratio (parts by weight) of components (i) and (ii) in total, to component (iii), that is (i) + (ii): (iii), is for example between about 1 : 200, for instance about 1 : 100, or about 1 : 50, or about 1 : 25, or about 1:10, for example about 1 : 5.

The amount of component (iii) used also depends on the effectiveness of the specific compound(s), the polymer and the specific application type; for example, an amount of 5 to 15% by weight of the compound tris[3-bromo-2,2-bis(bromomethyl)propyl] phosphate may be as efficient as an amount of 30 to 45% by weight of the compound decabromodiphenyl oxide in respect of the flame retardancy of the final composition.

The compositions of the present invention are useful for many applications, for example outdoor applications, including the following:
Thermoplastic olefins
Paintable thermoplastic olefins
Polypropylene molded articles
Polyethylene film
Molded polypropylene with brominated flame retardants
Molded thermoplastic olefin with brominated flame retardants
Polyethylene film with brominated flame retardants
Thermoplastic elastomers with other costabilizers
Grease-filled wire and cable insulation
Coatings over plastic substrates
Polyolefin tanks or containers containing chemicals
Polyolefin films with an antifog agent
Polyolefin films with IR thermal fillers such as hydrotalcites, e.g. DHT4A
Polyolefin films with an antistatic agent
Flame-resistant molded polypropylene articles
Flame-resistant molded thermoplastic olefins
Flame-resistant polyethylene film
Pre-formed films for lamination to plastic substrates
Electronic appliances
Containers, boxes, bins for storage and transportation
Automotive applications e.g. dashboard, back board
Furniture e.g. stadium seats, public seats
Roofing sheets
Roofing membranes
Flooring materials
Liners
Profiles, for example window and door profiles
Geomembranes
Awning fabrics
Banner films
Upholstery
Drapery
Carpeting
Tents, tarpaulins
Surgical gowns, caps and other hospital applications
Fabrics
Ropes
Nets
Tire cords
Parachutes

The compositions of the present invention are useful in textile laminates and as coatings of substrates as described in U.S. Pat. Nos. 6,235,658 and 6,251,995,

The materials containing the stabilizers described herein can be used for the production of moldings, rotomolded articles, injection molded articles, blow molded articles, mono- and multilayer films, extruded profiles, surface coatings and the like.

The resulting stabilized compositions of the invention may optionally also contain various conventional additives, for example in amounts from about 0.01 to about 10%, for instance from about 0.025 to about 4%, for example from about 0.1 to about 2% by weight of component (A), such as the materials listed below, or mixtures thereof.
1. Antioxidants
   1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.
   1.2. Alkylthiomethylphenos, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.
   1.3. Hydroguinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis-(3,5-di-tert-butyl-4-hydroxyphenyl) adipate.
   1.4. Tocopherols, for example α-tocopherol, β-tocopherol, γ-tocopherol, δ-tocopherol and mixtures thereof (Vitamin E).
   1.5. Hyhdroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis-(3,6-di-sec-amylphenol), 4,4'-bis(2,6-dimethyl-4-hydroxyphenyl)disulfide.
   1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(a-methylbenzyl)-4-nonylphenol], 2,2'-methylenebis[6-(α,α-dimethylbenzyl)-4-nonylphenol], 4,4'-methylenebis-(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis-(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra-(5-tert-butyl-4-hydroxy-2-methylphenyl)pentane.
   1.7. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.
   1.8. Hydroxybenzylated malonates, for example dioctadecyl-2,2-bis-(3,5-di-tert-butyl-2-hydroxybenzyl)-malonate, di-octadecyl-2-(3-tert-butyl-4-hydroxy-5-methylbenzyl)-malonate, didodecylmercaptoethyl-2,2-bis-(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
   1.9. Aromatic hydroxybenzyl compounds, for example 1,3,5-tris-(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
   1.10. Triazine Compounds, for example 2,4-bis(octylmercapto)-6-(3,5-di-tert-butyl-4-hydroxy-anilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris-(3,5-di-tert-butyl-4-hydroxybenzyl)isocyanu rate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.
   1.11. Benzyphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.
   1.12. Acylaminophenols, for example 4-hydroxylauranilide, 4-hydroxystearanilide, octyl N-(3,5-di-tert-butyl-4-hydroxyphenyl)carbamate.
   1.13. Esters of β-(3,5-di-tert-butyl-4-hydroxyphenyl)aropionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)-hydrazide, N,N'-bis[2-(3-[3,5-di-tert-butyl-4-hydroxyphenyl]propionyloxy)ethyl]oxamide (Naugard^{®}XL-1 supplied by Uniroyal).
   1.18. Ascorbic acid (vitamin C)
   1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenlenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono-and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- und dialkylated tert-butyldiphenylamines, 2,3-dihydro-3,3-dimethyl-4H-1,4-benzothiazine, phenothiazine, a mixture of mono- und dialkylated tert-butyl/tert-octylphenothiazines, a mixture of mono- und dialkylated tert-octyl-phenothiazines, N-allylphenothiazin, N,N,N',N'-tetraphenyl-1,4-diaminobut-2-ene, N,N-bis(2,2,6,6-tetramethyl-piperid-4-yl-hexamethylenediamine, bis(2,2,6,6-tetramethylpiperid-4-yl)sebacate, 2,2,6,6-tetramethylpiperidin-4-one, 2,2,6,6-tetramethylpiperidin-4-ol.
2. UV absorbers and light stabilisers
   2.1. 2-(2'-Hydroxyphenyl)benzotriazoles, for example 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl- 2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyl-oxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonyl-ethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; R-CH₂CH₂-COO-CH₂CH₂ 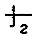 where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)-phenyl]-benzotriazole; 2-[2'-hydroxy-3'-(1,1,3,3-tetramethylbutyl)-5'-(α,α-dimethylbenzyl)-phenyl]benzotriazole.
   2.2. 2-Hydroxybenzophenones, for example the 4-hydroxy, 4-methoxy, 4-octyloxy, 4-decyl-oxy, 4-dodecyloxy, 4-benzyloxy, 4,2',4'-trihydroxy and 2'-hydroxy-4,4'-dimethoxy derivatives.
   2.3. Esters of substituted and unsubstituted benzoic acids, as for example 4-tertbutyl-phenyl salicylate, phenyl salicylate, octylphenyl salicylate, dibenzoyl resorcinol, bis(4-tert-butylbenzoyl) resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
   2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxy-cinnamate, butyl α-cyano-β-methyl-p-methoxy-cinnamate, methyl α-carbomethoxy-p-methoxycinnamate and N-(β-carbomethoxy-β-cyanovinyl)-2-methylindoline.
   2.5. Nickel compounds, for example nickel complexes of 2,2'-thio-bis-[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenyl undecylketoxime, nickel complexes of 1-phenyl-4-lauroyl-5-hydroxypyrazole, with or without additional ligands.
   2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butane-tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)-malonate, 3-n-octyl-7,7,9,9-tetramethyl-1,3,8-triazaspiro[4.5]decan-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis-(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl )-1,3,5-triazine and 1,2-bis(3-aminopropylamino)-ethane, the condensate of 2-chloro-4,6-di-(4-n-butylamino-1,2,2,6,6-pentamethylpiperidyl)-1,3,5-triazine and 1,2-bis-(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidin-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensation product of N,N'-bis(2,2,6,6-tetramethyl-4-piperidyl)hexamethylenediamine and 4-cyclohexylamino-2,6-dichloro-1,3,5-triazine, a condensation product of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro [4,5]decane und epichlorohydrin, 1,1-bis(1,2,2,6,6₋pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, diester of 4-methoxy-methylene-malonic acid with 1,2,2,6,6-pentamethyl-4-hydroxypiperidine, poly[methylpropyl-3-oxy-4-(2,2,6,6-tetramethyl-4-piperidyl)]siloxane, reaction product of maleic acid anhydride-α-olefin-copolymer with 2,2,6,6-tetramethyl-4-aminopiperidine or 1,2,2,6,6-pentamethyl-4-aminopiperidine.
   2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.
   2.8. 2-(2-Hydroxyphenyl)-1,3,5-triazines, for examples 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxy-propoxy)phenyl]-4,6-bis(2,4-dimethyl)-1,3,5-triazine, 2-[2-hydroxy-4-(2-hydroxy-3-octyloxy-propyloxy)phenyl]-4,6-bis(2,4-dimethyl)-1,3,5-triazine, 2-[4-(dodecyloxy/tridecyloxy-2-hydroxypropoxy)-2-hydroxy-phenyl]-4,6-bis(2,4-dimethylphenyl)-1,3,5-triazine, 2-[2-hydroxy-4-(2-hydroxy-3-dodecyloxy-propoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxy-propoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine.
3. Metal deactivators, for example N,N'-diphenyloxamide, N-salicylal-N'-salicyloyl hydrazine, N,N'-bis(salicyloyl) hydrazine, N,N'-bis(3,5-di-tert-butyl-4-hydroxyphenylpropionyl) hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
4. Phosphites and phosphonites, for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl)-pentaerythritol diphosphite, diisodecyloxypentaerythritol diphosphite, bis(2,4-di-tert-butyl-6-methylphenyl)pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz-[d,g]-1,3,2-dioxaphosphocin, bis(2,4-di-tert-butyl-6-methylphenyl) methyl phosphite, bis(2,4-di-tert-butyl-6-methylphenyl) ethyl phosphite; 6-fluoro-2,4,8,10-tetra-tert-butyl-12-methyl-dibenz[d,g]-1,3,2-dioxaphosphocin, 2,2',2"-nitrilo[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.

Specific examples are the following phosphites:
Tris(2,4-di-tert-butylphenyl) phosphite (Irgafos^{®}168, Ciba-Geigy); tris(nonylphenyl) phosphite, 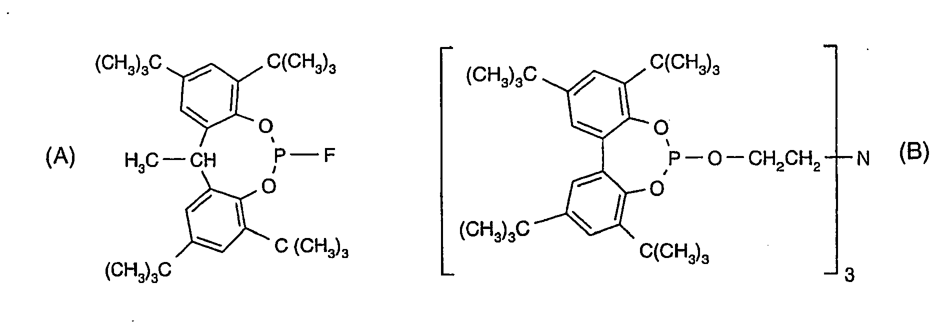 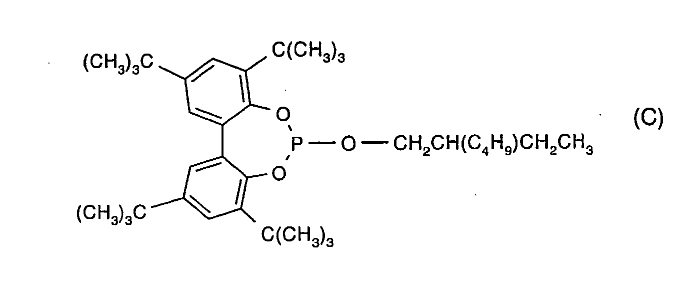 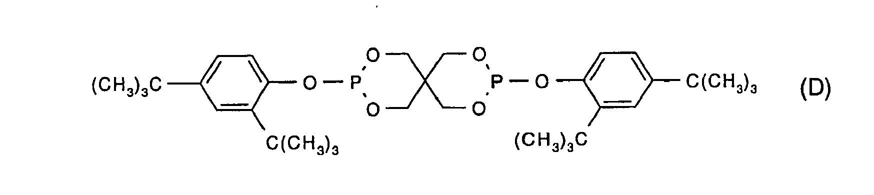 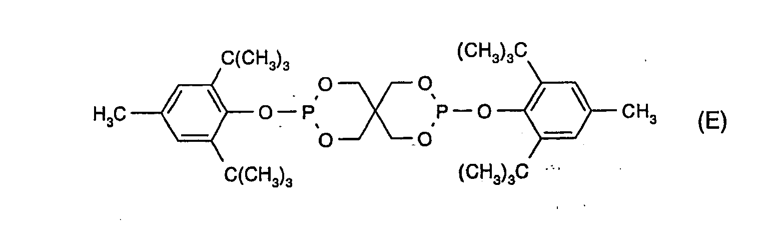 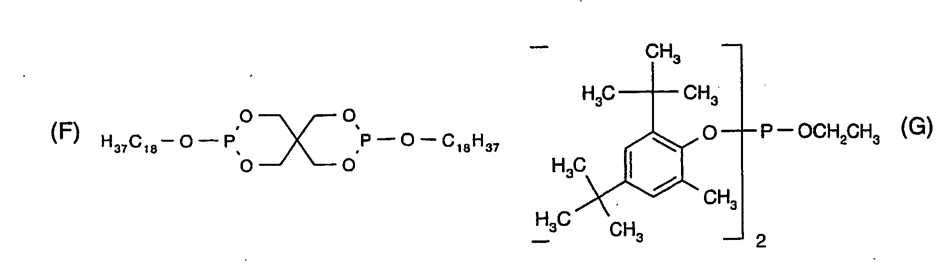
5. Hydroxylamines, for example, N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.
6. Nitrones, for example, N-benzyl-alpha-phenyl-nitrone, N-ethyl-alpha-methyl-nitrone, N-octyl-alpha-heptyl-nitrone, N-lauryl-alpha-undecyl-nitrone, N-tetradecyl-alpha-tridcyl-nitrone, N-hexadecyl-alpha-pentadecyl-nitrone, N-octadecyl-alpha-heptadecyl-nitrone, N-hexadecyl-alpha-heptadecyl-nitrone, N-ocatadecyl-alpha-pentadecyl-nitrone, N-heptadecyl-alpha-heptadecyl-nitrone, N-octadecyl-alpha-hexadecyl-nitrone, nitrone derived from N,N-dialkylhydroxylamine derived from hydrogenated tallow amine.
7. Thiosynergists, for example, dilauryl thiodipropionate or distearyl thiodipropionate.
8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
9. Polyamide stabilisers, for example, copper salts in combination with iodides and/or phosphorus compounds and salts of divalent manganese.
10. Basic co-stabilisers, for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids for example calcium stearate, zinc stearate, magnesium behenate, magnesium stearate, sodium ricinoleate and potassium palmitate, antimony pyrocatecholate or zink pyrocatecholate.
11. Nucleating agents, for example, inorganic substances such as talcum, metal oxides such as titanium dioxide or magnesium oxide, phosphates, carbonates or sulfates of, for example, alkaline earth metals; organic compounds such as mono or polycarboxylic acids and the salts thereof, e.g. 4-tert-butylbenzoic acid, adipic acid, diphenylacetic acid, sodium succinate or sodium benzoate; polymeric compounds such as ionic copolymers (ionomers). Specific examples are 1,3:2,4-bis(3',4'-dimethylbenzylidene)sorbitol, 1,3:2,4-di(paramethyldibenzylidene)sorbitol, und 1,3:2,4-di(benzylidene)sorbitol.
12. Fillers and reinforcing agents, for example, calcium carbonate, silicates, glass fibres, glass bulbs, asbestos, talc, kaolin, mica, barium sulfate, metal oxides and hydroxides, carbon black, graphite, wood flour and flours or fibers of other natural products, synthetic fibers.
13. Other additives, for example, plasticisers, lubricants, emulsifiers, pigments, rheology additives, catalysts, flow-control agents, optical brighteners, flameproofing agents, antistatic agents and blowing agents.
14. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839 or EP-A-0591102 or 3-[4-(2-acetoxyethoxy)-phenyl]-5,7-di-tert-butyl-benzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butyl-benzofuran-2-one, 3-(3,5-dimethyl-4-pivaloyloxyphenyl)-5,7-di-tert-butylbenzofuran-2-one, 3-(3,4-dimethylphenyl)-5,7-di-tert-butyl-benzofuran-2-one, 3-(2,3-dimethylphenyl)-5,7-di-tert-butyl-benzofuran-2-one.
15. Amine oxides, for example amine oxide derivatives as disclosed in U.S. Patent Nos. 5,844,029 and 5,880,191, didecyl methyl amine oxide, tridecyl amine oxide, tridodecyl amine oxide and trihexadecyl amine oxide. U.S. Patent Nos. 5,844,029 and 5,880,191 disclose the use of saturated hydrocarbon amine oxides towards the stabilization of thermoplastic resins. It is disclosed that the thermoplastic compositions may further contain a stabilizer or mixture of stabilizers selected from phenolic antioxidants, hindered amine light stabilizers, ultraviolet light absorbers, organic phosphorus compounds, alkaline metal salts of fatty acids and thiosynergists. The co-use of amine oxides with other stabilizers towards stabilizing polyolefins is not exemplified.

Specific examples of additives are phenolic antioxidants (item 1 of the list), further sterically hindered amines (item 2.6 of the list), light stabilizers of the benzotriazole and/or o-hydroxyphenyltriazine class (items 2.1 and 2.8 of the list), phosphites and phosphonites (item 4 of the list) and peroxide-destroying compounds (item 5.) of the list.

Additional specific examples of additives (stabilizers) which are benzofuran-2-ones, such as described, for example, in US-A-4,325,863, US-A-4,338,244 or US-A-5,175,312.

The instant composition can additionally contain another UV absorber selected from the group consisting of the s-triazines, the oxanilides, the hydroxybenzophenones, benzoates and the α-cyanoacrylates. Particularly, the instant composition may additionally contain an effective stabilizing amount of at least one other 2-hydroxyphenyl-2H-benzotriazole; another tris-aryl-s-triazine; or hindered amine or mixtures thereof. For example, additional components are selected from pigments, dyes, plasticizers, antioxidants, thixotropic agents, levelling assistants, basic costabilizers, further light stabilizers like UV absorbers and/or sterically hindered amines, metal passivators, metal oxides, organophosphorus compounds, hydroxylamines, and mixtures thereof, especially pigments, phenolic antioxidants, calcium stearate, zinc stearate, UV absorbers of the 2-(2'-hydroxyphenyl)benzotriazole and 2-(2-Hydroxyphenyl)-1,3,5-triazine classes, and sterically hindered amines.

The additives of the invention and optional further components may be added to the polymer material individually or mixed with one another. If desired, the individual components can be mixed with one another before incorporation into the polymer for example by dry blending, compaction or in the melt. Subject of the invention therefore is also a flame retardant additive combination comprising
(i) At least one low molecular weight sterically hindered alkoxyamine stabilizer selected from the group consisting of
   1-Cyclohexyloxy-2,2,6,6-tetramethyl-4-octadecylaminopiperidine;
   bis(1-Octyloxy-2,2,6,6-tetramethylpiperldin-4-yl) sebacate;
   2,4-bis[(1-Cyclohexyloxy-2,2,6,6-tetramethylpiperidin-4-yl)butylamino]-6-(2-hydroxyethylamino-s-triazine;
   bis(1-Cyclohexyloxy-2,2,6,6-tetramethylpiperidin-4-yl) adipate;
   2,4-bis[(1-Cyclohexyloxy-2,2,6,6-tetramethylpiperidin-4-yl)butylamino]-6-chloro-s-triazine;
   1-(2-Hydroxy-2-methylpropoxy)4-hydroxy-2,2,6,6-tetramethylpiperidine;
   1-(2-Hydroxy-2-methylpropoxy)-4-oxo-2,2,6,6-tetramethylpiperidine;
   1-(2-Hydroxy-2-methylpropoxy)-4-octadecanoyloxy-2,2,6,6-tetramethylpiperidine;
   bis(1-(2-Hydroxy-2-methylpropoxy)-2,2,6,6-tetramethylpiperidin-4-yl) sebacate;
   bis(1-(2-Hydroxy-2-methylpropoxy)-2,2,6,6-tetramethylpiperidin-4-yl) adipate; and
   2,4-bis{N-[1-(2-Hydroxy-2-methylpropoxy)2,2,6,6-tetramethylpipeddin-4-yl]-N-butylamino}-6-(2-hydroxyethylamino)-s-triazine;
(ii) At least one high molecular weight sterically hindered alkoxyamine stabilizer selected from the group consisting of
   The reaction product of 2,4-bis[(1-cyclohexyloxy-2,2,6,6-piperidin-4-yl)butylamino]-6-chloro-s-triazine with N,N'-bis(3-aminopropyl)ethylenediamine) and
   The compound of formula 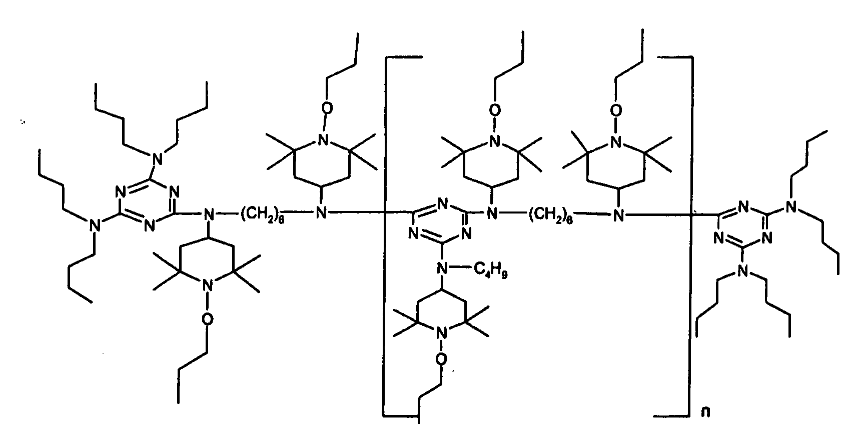 in which n is from 1 to 15;
(iii) At least one conventional flame retardant selected from the group consisting of
   Chloroalkyl phosphate esters,
   Polybrominated diphenyl oxide,
   Decabromodiphenyl oxide,
   tris[3-Bromo-2,2-bis(bromomethyl)propyl] phosphate,
   bis(2,3-Dibromopropyl ether) of bisphenol A,
   Brominated epoxy resin,
   Ethylene-bis(tetrabromophthalimide),
   bis(Hexachlorocyclopentadieno)cyclooctane,
   Chlorinated paraffins,
   1,2-bis(Tribromophenoxy)ethane,
   Tetrabromo-bisphenol A,
   Ethylene bis-(dibromo-norbornanedicarboximide),
   bis-(Hexachlorocyclopentadieno) cyclooctane,
   tris-(2,3-Dibromopropyl)-isocyanurate,
   Ethylene-bis-tetrabromophthalimide,
   Triphenyl phosphate,
   Ammonium polyphosphate,
   Resorcinol diphosphate oligomer,
   Melamine phosphates,
   Melamine pyrophosphates and
   Ethylenediamine diphosphate.

Conveniently, the additives of above components (i), (ii) and (iii) and possibly further additives as described above may be dry blended and then extruded, for instance in a twin screw extruder at 180-220°C, with or without nitrogen atmosphere. The material thus obtained may be further processed according to known methods. The surface of the articles formed do not show any loss of gloss or any kind of roughness.

A preferred polymer article comprises a thermoplastic polyolefin as polymer substrate; especially a thermoplastic polyolefin roofing membrane which comprises a pigment selected from titanium dioxide and carbon black.

Components (B) of specific technical importance are
(i) bis(1-octyloxy-2,2,6,6-tetramethylpiperidin-4-yl) sebacate or 1-(2-hydroxy-2-methylpropoxy)-4-octadecanoyloxy-2,2,6,6-tetramethylpiperidine and
(ii) the reaction product of 2,4-bis[(1-cyclohexyloxy-2,2,6,6-piperidin-4-yl)butylamino]-6-chloro-s-triazine with N,N'-bis(3-aminopropyl)ethylenediamine) or
   the compound of formula 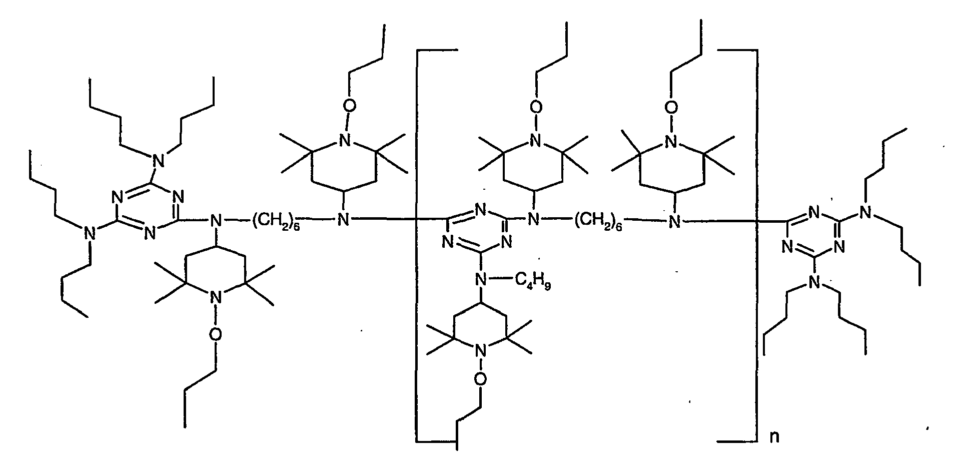 in which n is from 1 to 15 and
(iii) an organohalogen flame retardant, especially tris[3-bromo-2,2-bis(bromomethyl)-propyl] phosphate.

A polymer article preferably containing these additives is a thermoplastic polyolefin roofing membrane which also comprises a pigment selected from titanium dioxide and carbon black.

Preferred molded polymer articles comprise at least one sterically hindered alkoxyamine stabilizer and at least one conventional flame retardant selected from the group consisting of the organohalogen, phosphorus containing and melamine based flame retardants, wherein said article comprises no flame-retardant filler or a flame-retardant filler in an amount less than about 3% by weight based on the weight of the article. Especially preferred is a polymer article which is about 5 mil to about 100 mil thick (0.1 to 3 mm), and which comprises a pigment selected from titanium dioxide and carbon black, such as a construction article selected from the group consisting of roofing membranes, window profiles, siding and moldings. Preferred polymer substrate for these applications is a thermoplastic polyolefin.

Further, the instant invention pertains to a process for imparting light stability and flame retardancy to an organic polymeric substrate, which process comprises adding to said polymeric substrate an effective flame retarding amount of a synergistic mixture of
(i) At least one low molecular weight sterically hindered alkoxyamine stabilizer selected from the group consisting of
   1-Cyclohexyloxy-2,2,6,6-tetramethyl-4-octadecylaminopiperidine;
   bis(1-Octyloxy-2,2,6,6-tetramethylpiperidin-4-yl) sebacate;
   2,4-bis[(1-Cyclohexyloxy-2,2,6,6-tetramethylpiperidin-4-yl)butylamino]-6-(2-hydroxyethylamino-s-triazine;
   bis(1-Cyclohexyloxy-2,2,6,6-tetramethylpiperidin-4-yl) adipate;
   2,4-bis[(1-Cyclohexgoxy-2,2,6,6-tetramethylpiperidin-4-yl)butylamino]-6-chloro-s-triazine;
   1-(2-Hydroxy-2-methylpropoxy)4-hydroxy-2,2,6,6-tetramethylpiperidine;
   1-(2-Hydroxy-2-methylpropoxy)-4-oxo-2,2,6,6-tetramethylpiperidine;
   1-(2-Hydroxy-2-methylpropoxy)-4-octadecanoyloxy-2,2,6,6-tetramethylpiperidine;
   bis(1-(2-Hydroxy-2-methylpropoxy)-2,2,6,6-tetramethylpiperidin-4-yl) sebacate;
   bis(1-(2-Hydroxy-2-methylpropoxy)-2,2,6,6-tetramethylpiperidin-4-yl) adipate; and
   2,4-bis{N-[1-(2-Hydroxy-2-methylpropoxy)-2,2,6,6-tetramethylpiperidin-4-yl]-N-butylamino}-6-(2-hydroxyethylamino)-s-triazine;
(ii) At least one high molecular weight sterically hindered alkoxyamine stabilizer selected from the group consisting of
   The reaction product of 2,4-bis[(1-cyclohexyloxy-2,2,6,6-piperidin-4-yl)butylamino]-6-chloro-s-triazine with N,N'-bis(3-aminopropyl)ethylenediamine) and
   The compound of formula 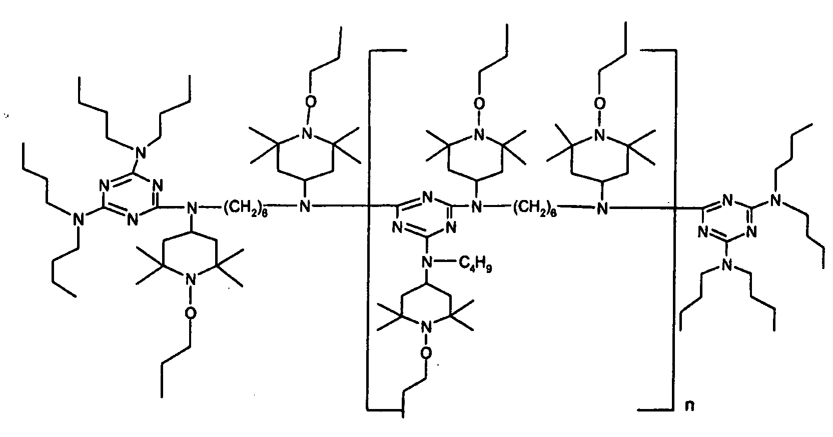 in which n is from 1 to 15;
(iii) At least one conventional flame retardant selected from the group consisting of
   Chloroalkyl phosphate esters,
   Polybrominated diphenyl oxide,
   Decabromodiphenyl oxide,
   tris[3-Bromo-2,2-bis(bromomethyl)propyl] phosphate,
   bis(2,3-Dibromopropyl ether) of bisphenol A,
   Brominated epoxy resin,
   Ethylene-bis(tetrabromophthalimide),
   bis(Hexachlorocyclopentadieno)cyclooctane,
   Chlorinated paraffins,
   1,2-bis(Tribromophenoxy)ethane,
   Tetrabromo-bisphenol A,
   Ethylene bis-(dibromo-norbornanedicarboximide),
   bis-(Hexachlorocyclopentadieno) cyclooctane,
   tris-(2,3-Dibromopropyl)-isocyanurate,
   Ethylene-bis-tetrabromophthalimide,
   Triphenyl phosphate,
   Ammonium polyphosphate,
   Resorcinol diphosphate oligomer,
   Melamine phosphates,
   Melamine pyrophosphates and
   Ethylenediamine diphosphate.

The incorporation of the additives of the invention and optional further components into the polymer is carried out by known methods such as dry blending in the form of a powder, or wet mixing in the form of solutions, dispersions or suspensions for example in an inert solvent, water or oil. The additives of the invention and optional further additives may be incorporated, for example, before or after molding or also by applying the dissolved or dispersed additve or additive mixture to the polymer material, with or without subsequent evaporation of the solvent or the suspension/dispersion agent. They may be added directly into the processing apparatus (e.g. extruders, internal mixers, etc), e.g. as a dry mixture or powder or as solution or dispersion or suspension or melt.

The incorporation can be carried out in any heatable container equipped with a stirrer, e.g. in a closed apparatus such as a kneader, mixer or stirred vessel. The incorporation is for example carried out in an extruder or in a kneader. It is immaterial whether processing takes place in an inert atmosphere or in the presence of oxygen.

The addition of the additive or additive blend to the polymer can be carried out in all customary mixing machines in which the polymer is melted and mixed with the additives. Suitable machines are known to those skilled in the art. They are predominantly mixers, kneaders and extruders.

The process is for instance carried out in an extruder by introducing the additive during processing.

Specific examples of suitable processing machines are single-screw extruders, contrarotating and corotating twin-screw extruders, planetary-gear extruders, ring extruders or cokneaders. It is also possible to use processing machines provided with at least one gas removal compartment to which a vacuum can be applied.

Suitable extruders and kneaders are described, for example, in Handbuch der Kunststoffextrusion, Vol. 1 Grundlagen, Editors F. Hensen, W. Knappe, H. Potente, 1989, pp. 3-7, ISBN:3-446-14339-4 *(*Vol. 2 Extrusionsanlagen 1986, ISBN 3-446-14329-7*).*

For example, the screw length is 1-60 screw diameters, for example 35-48 screw diameters. The rotational speed of the screw is for instance 10-600 rotations per minute (rpm), for example 25-300 rpm.

The maximum throughput is dependent on the screw diameter, the rotational speed and the driving force. The process of the present invention can also be carried out at a level lower than maximum throughput by varying the parameters mentioned or employing weighing machines delivering dosage amounts.

If a plurality of components are added, these can be premixed or added individually.

The additives of the invention and optional further additives can also be sprayed onto the polymer material. They are able to dilute other additives (for example the conventional additives indicated above) or their melts so that they can be sprayed also together with these additives onto the material. Addition by spraying during the deactivation of the polymerization catalysts is particularly advantageous; in this case, the steam evolved may be used for deactivation of the catalyst. In the case of spherically polymerized polyolefins it may, for example, be advantageous to apply the additives of the invention, optionally together with other additives, by spraying.

The additives of the invention and optional further additives can also be added to the polymer in the form of a masterbatch ("concentrate") which contains the components in a concentration of, for example, about 1% to about 40%, for example about 2% to about 20 % by weight incorporated in a polymer. The polymer must not be necessarily of identical structure than the polymer where the additives are added finally. In such operations, the polymer can be used in the form of powder, granules, solutions, suspensions or in the form of latices.

Incorporation can take place prior to or during the shaping operation. The materials containing the additives of the invention described herein are for example used for the production of molded articles, for example rotomolded articles, injection molded articles, profiles and the like. Thus, a molded polymer article made flame retardant by the incorporation of is another object of the invention.

It is also contemplated that PTFE, polytetrafluoroethylene (for example Teflon^{®} 6C; E. I. Du Pont), may be advantageously added to the present compositions as an additional flame retardant, as disclosed in U.S. application 60/312,517, filed Aug. 15, 2001.

It has further unexpectedly been observed that polymer molded articles, which normally comprise large amounts of flame-retardant filler in order to maintain flame retardant properties, may be stabilized against light, heat and oxygen and made flame retardant, by the incorporation therein of a present hindered alkoxyamine selected from present components (i) or (ii), in combination with a conventional organohalogen, phosphorus containing or melamine based flame retardant, and the amount of flame-retardant filler necessary is greatly reduced or even totally eliminated. The polymer molded articles are for example polyolefin molded articles, for example thin-section articles. The flame-retardant filler is typically magnesium hydroxide.

The thin-section polyolefin molded articles advantageously comprise present components (i), (ii) and (iii). The polyolefin molded articles of this invention, with reduced levels of flame-retardant filler or no flame-retardant filler, maintain flame retardancy and have improved physical properties.

The polyolefin molded articles of this invention may be used for example as roofing membranes, siding, window profiles and moldings. Such molded articles are for example about 5 mil to about 100 mil thick (0.1 to 3 mm), for example about 20 mil to about 100 mil (0.5 to 3 mm) thick, for instance about 10 mil to about 80 mil (0.1 to 2 mm), for example about 40 mil to about 100 mil thick (1-3 mm). The polyolefin is in particular thermoplastic polyolefin (TPO). The molded articles of this invention exhibit better physical properties than the state of
(i) At least one low molecular weight sterically hindered alkoxyamine stabilizer selected from the group consisting of
   1-Cyclohexyloxy-2,2,6,6-tetramethyl-4-octadecylaminopiperidine;
   bis(1-Octyloxy-2,2,6,6-tetramethylpiperidin-4-yl) sebacate;
   2,4-bis[(1-Cyclohexyloxy-2,2,6,6-tetramethylpiperidin-4-yl)butylamino]-6-(2-hydroxyethylamino-s-triazine;
   bis(1-Cyclohexyloxy-2,2,6,6-tetramethylpiperidin-4-yl) adipate;
   2,4-bis[(1-Cyclohexyloxy-2,2,6,6-tetramethylpiperidin-4-yl)butylamino]-6-chloro-s-triazine;
   1-(2-Hydroxy-2-methylpropoxy)-4-hydroxy-2,2,6,6-tetramethylpiperidine;
   1-(2-Hydroxy-2-methylpropoxy)-4-oxo-2,2,6,6-tetramethylpiperidine;
   1-(2-Hydroxy-2-methylpropoxy)-4-octadecanoyloxy-2,2,6,6-tetramethylpiperidine;
   bis(1-(2-Hydroxy-2-methylpropoxy)-2,2,6,6-tetramethylpiperidin-4-yl) sebacate;
   bis(1-(2-Hydroxy-2-methylpropoxy)-2,2,6,6-tetramethylpiperidin-4-yl) adipate; and
   2,4-bis{N-[1-(2-Hydroxy-2-methylpropoxy)-2,2,6,6-tetramethylpiperidin-4-yl]-N-butylamino}-6-(2-hydroxyethylamino)-s-triazine;
(ii) At least one high molecular weight sterically hindered alkoxyamine stabilizer selected from the group consisting of
   The reaction product of 2,4-bis[(1-cyclohexyloxy-2,2,6,6-piperidin-4-yl)butylamino]-6-chloro-s-triazine with N,N'-bis(3-aminopropyl)ethylenediamine) and
   The compound of formula 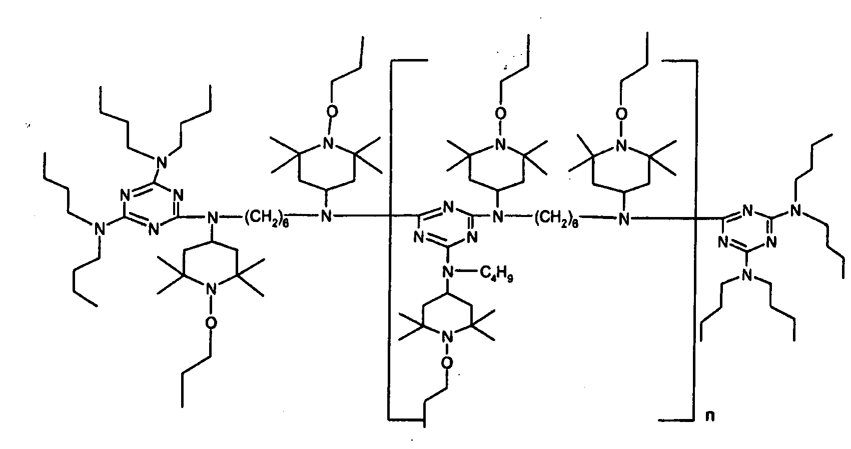 in which n is from 1 to 15;
(iii) At least one conventional flame retardant selected from the group consisting of
   Chloroalkyl phosphate esters,
   Polybrominated diphenyl oxide,
   Decabromodiphenyl oxide,
   tris[3-Bromo-2,2-bis(bromomethyl)propyl] phosphate,
   bis(2,3-Dibromopropyl ether) of bisphenol A,
   Brominated epoxy resin,
   Ethylene-bis(tetrabromophthalimide),
   bis(Hexachlorocyclopentadieno)cyclooctane,
   Chlorinated paraffins,
   1,2-bis(Tribromophenoxy)ethane,
   Tetrabromo-bisphenol A,
   Ethylene bis-(dibromo-norbornanedicarboximide),
   bis-(Hexachlorocyclopentadieno) cyclooctane,
   tris-(2,3-Dibromopropyl)-isocyanurate,
   Ethylene-bis-tetrabromophthalimide,
   Triphenyl phosphate,
   Ammonium polyphosphate,
   Resorcinol diphosphate oligomer,
   Melamine phosphates,
   Melamine pyrophosphates and
   Ethylenediamine diphosphate.
the art formulations, as exhibited by mechanical properties such as tensile strength, elongation resistance and crack resistance.

The effective flame retarding amount of component (B) is that needed to show flame retarding efficacy as measured by one of the standard methods used to assess flame retardancy. These include the NFPA 701 Standard Methods of Fire Tests for Flame-Resistant Textiles and Films, 1989 and 1996 editions; the UL 94 Test for Flammability of Plastic Materials for Parts in Devices and Appliances, 5th Edition, October 29, 1996; Limiting Oxygen Index (LOI), ASTM D-2863; and Cone Calorimetry, ASTM E-1354. Ratings according to the UL 94 V test are as compiled in the following table:

| Rating | Afterflame time | Burning drips | Burn to Clamp |
|---|---|---|---|
| V-0 | < 10 s | no | no |
| V-1 | < 30 s | no | no |
| V-2 | < 30 s | yes | no |
| Fail | < 30 s | | yes |
| Fail | > 30 s | | no |

Coadditives found particularly useful for use with the instant compound combination of components (i), (ii) and (iii) in flame retardant compositions are as follows:

### UV absorbers:

2-(2-hydroxy-3,5-di-α-cumylphenyl)-2H-benzotriazole, (TINUVIN^{®} 234, Ciba Specialty Chemicals Corp.);
2-(2-hydroxy-5-methylphenyl)-2H-benzotriazole, (TINUVIN^{®} P, Ciba Specialty Chemicals Corp.);
5-chloro-2-(2-hydroxy-3,5-di-tert-butylphenyl)-2H-benzotriazole, (TINUVIN^{®} 327, Ciba Specialty Chemicals Corp.);
2-(2-hydroxy-3,5-di-tert-amylphenyl)-2H-benzotriazole, (TINUVIN^{®} 328, Ciba Specialty Chemicals Corp.);
2-(2-hydroxy-3-α-cumyl-5-tert-octylphenyl)-2H-benzotriazole, (TINUVIN^{®} 928, Ciba Specialty Chemicals Corp.);
2,4-di-tert-butylphenyl 3,5-di-tert-butyl-4-hydroxybenzoate, (TINUVIN^{®} 120, Ciba Specialty Chemicals Corp.);
2-hydroxy-4-n-octyloxybenzophenone, (CHIMASSORB^{®} 81, Ciba Specialty Chemicals Corp.);
2,4-bis(2,4-dimethyphenyl)-6-(2-hydroxy-4-octyloxyphenyl)-s-triazine, (CYASORB^{®} 1164, Cytec).

The following examples are meant for illustrative purposes only and are not to be construed to limit the scope of this invention in any manner whatsoever. Where given, room temperature depicts a temperature in the range 20-25°C. Percentages are by weight of the polymer substrate unless otherwise indicated.

### Abbreviations:

- v: parts by volume
- w: parts by weight
- ¹Hnmr: nuclear magnetic resonance (NMR) of ¹H
- m/z: mass spectrometry (atomic units)
- amu: molecular weight in g/mol (= atomic units)
- PP: polypropylene
- PE: polyethylene
- PE-LD: low density polyethylene (LDPE)

### Test Methods

NFPA 701 Standard Methods of Fire Tests for Flame-Resistant Textiles and Films, 1989 and 1996 editions;

UL 94 Test for Flammability of Plastic Materials for Parts in Devices and Appliances, 5th Edition, October 29, 1996;

Limiting Oxygen Index (LOI), ASTM D-2863;

Cone Calorimetry, ASTM E-1 or ASTM E 1354;

ASTM D 2633-82, burn test.

### Test compounds

Low molecular weight alkoxyamines of present component (i):
NOR1 1-cyclohexyloxy-2,2,6,6-tetramethyl-4-octadecylaminopiperidine;
NOR2 bis(1-octyloxy-2,2,6,6-tetramethylpiperidin-4-yl) sebacate;
NOR3 2,4-bis[(1-cyclohexyloxy-2,2,6,6-tetramethylpiperidin-4-yl)butylamino]-6-(2-hydroxyethylamino-s-triazine;
NOR3 bis(1-cyclohexyloxy-2,2,6,6-tetramethylpiperidin-4-yl) adipate;
NOR4 2,4-bis[(1-cyclohexyloxy-2,2,6,6-piperidin-4-yl)butylamino]-6-chloro-s-triazine;
NOR5 1-(2-hydroxy-2-methylpropoxy)-4-hydroxy-2,2,6,6-tetramethylpiperidine;
NOR6 1-(2-hydroxy-2-methylpropoxy)-4-oxo-2,2,6,6-tetramethylpiperidine;
NOR7 1-(2-hydroxy-2-methylpropoxy)-4-octadecanoyloxy-2,2,6,6-tetramethylpiperidine;
NOR8 bis(1-(2-hydroxy-2-methylpropoxy)-2,2,6,6-tetramethylpiperidin-4-yl) sebacate;
NOR9 bis(1-(2-hydroxy-2-methylpropoxy)-2,2,6,6-tetramethylpiperidin-4-yl) adipate; and
NOR10 2,4-bis{N-[1-(2-hydroxy-2-methylpropoxy)-2,2,6,6-tetramethylpiperidin-4-yl]-N-butylamino}-6-(2-hydroxyethylamino)-s-triazine.

High molecular weight alkoxyamines of present component (ii):
NOR11 the reaction product of 2,4-bis[(1-cyclohexyloxy-2,2,6,6-piperidin-4-yl)-butylamino]-6-chloro-s-triazine with N,N'-bis(3-aminopropyl)ethylenediamine) [CAS Reg. No. 191680-81-6];
NOR11 is represented as a mixture of compounds with main component of the formula

   R₁NH-CH₂CH₂CH₂NR₂CH₂CH₂NR₃CH₂CH₂CH₂NHR₄

   wherein 3 of R₁, R₂, R₃ and R₄ are residues of formula 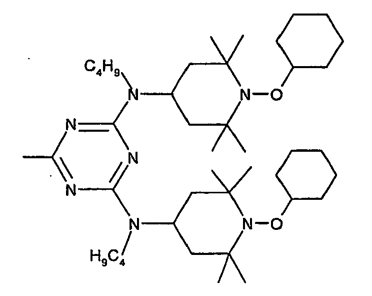 and 1 of R₁, R₂, R₃ and R₄ is hydrogen
(NOR11 is a high molecolar weight compound disclosed in example 3 of U.S. Pat. No. 5,844,026); and
NOR12 the compound of formula 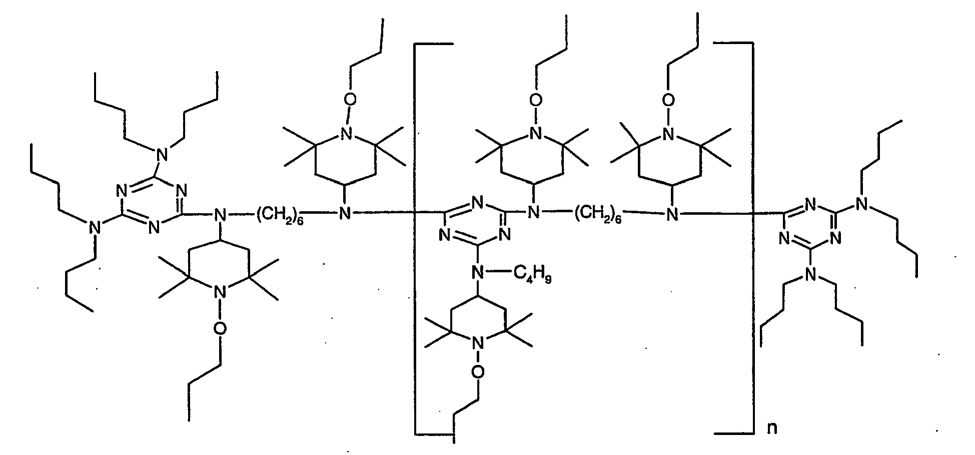 in which n is from 1 to 15.

Conventional flame retardants of comonent (iii):
DBDPO is decabromodiphenyl oxide,
FR-1 tris[3-bromo-2,2-bis(bromomethyl)propyl] phosphate, (PB 370^{®}, FMC Corp.),
FR-2 ammonium polyphosphate (APP),
FR-3 bis(2,3-dibromopropyl) ether of tetrabromobisphenol A (PE68),
FR-4 ammonium polyphosphate/synergist blend, HOSTAFLAM^{®}AP750,
FR-5 decabromodiphenyl oxide (DBDPO; obtained from Dead Sea Bromine),
FR-6 ethylene bis-(tetrabromophthalimide), (SAYTEX^{®}BT-93),
FR-7 melamine phosphate, MELAPUR^{®} P 46,
FR-8 ammonium polyphosphate, EXOLIT^{®} AP752,
FR-9 tris-(2,3-dibromopropyl)-isocyanurate and
FR-10 hexabromocyclododecane.

Sterically hindered amine stabilizers used in the comparative examples are compounds of formulae
- A: R-NH-(CH₂)₃-N(R)-(CH₂)₂-N(R)-(CH₂)₃-NH-R (CAS Registry No. 106990-43-6) where R is the group 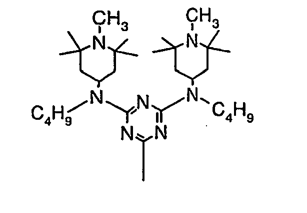
- B: poly [[6-[(1,1,3,3-tetramethyl butyl) amino]-1,3,5-triazine-2,4-diyl][[(2,2,6,6-tetramethyl-4-piperidyl) imino] hexamethylene [(2,2,6,6-tetramethyl-4-piperidyl) imino]](CAS-No. 70624-18-9)
- C: bis(2,2,6,6-tetramethylpiperidin-4-yl)-sebacate (CAS-No. 52829-07-9)
- D: oligomer (CAS-No. 65447-77-0) of the formula

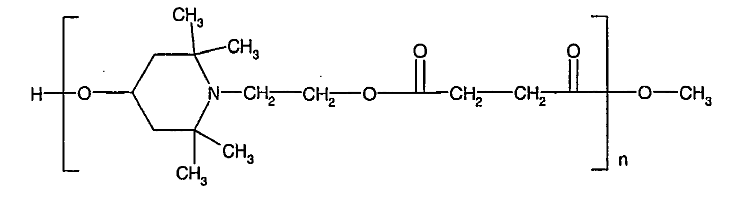

### Further stabilizers:

- E: 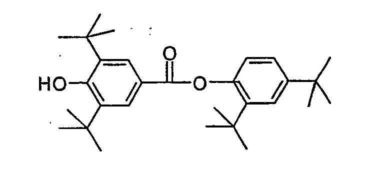
- F: 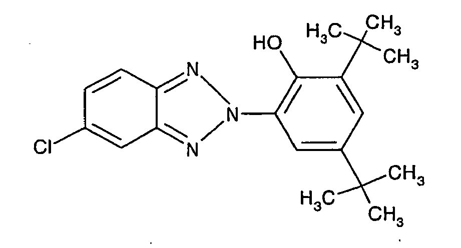
- G:

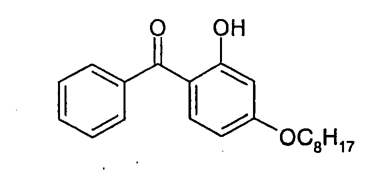

Compounds NOR2, NOR7, NOR11, NOR12 and A-G are commercial stabilizers available from Ciba Specialty Chemicals.

### Example 1

Sample preparation: Polymer powder and stabilizers are pre-mixed (Henschel mixer, 800 rpm, room temperature), pigment powder and flame retardant are added as concentrate in PP and homogenized in a drum mixer. Further homogenization and granulation is achieved by extrusion (Collin® twin screw extruder, max 200°C, 100 rpm). Subsequently, the mixture is processed into a flat film by means of a single screw extruder (max 200°C, 70 rpm) equipped with a corresponding nozzle (sample dimension 2mm thickness, 10 cm width).

Weathering: Punched samples are exposed to accelerated weathering (Atlas^{®} WOM Ci 65, 0.35W/m² (at 340nm), 102 min dry, 18 min water spray, 63°C black panel temperature. The effect of weathering on the surface is assessed in the following manner:
Visual inspection of chalking (chalking indicates decomposition on the surface).
Gloss: Minolta; degradation of surface reduces the reflection of polarized light (60° gloss as defined in DIN 67530).
ΔE: Color change (according to DIN 6174).

### Formulation:

| | |
|---|---|
| 84 | parts by weight of polypropylene-ethylene copolymer (Novolen® PPG 1022), |
| 15 | parts by weight of a PE-based flame retardant masterbatch containing 51% by weight of ethylene-bis-tetrabromophthalimide and 17 % by weight of Sb₂O₃, |
| 1 | part by weight of TiO₂ and |
| 0.2 | parts by weight of blue pigment (Cromophtal blue 4GNP) |

and stabilizers as shown in the following table (amounts given in % by weight of the total formulation). The results are shown in the following table.

**Surface assessment after weathering for 2000 h**

| Exp. # | Stabilizers | Visual | Gloss | △E |
|---|---|---|---|---|
| a* | none | chalking | 3 | 5.9 |
| | 0.3% NOR7 | | | |
| c | 0.1% NOR12 | unchanged | 55 | 1.9 |
| | 0.2% F | | | |
| | 0.3% C | | | |
| d* | 0.1% B | Chalking | 8 | 4.6 |
| | 0.2% F | | | |
| | 0.3% NOR2 | | | |
| f | 0.1% NOR12 | unchanged | 57 | 3.5 |
| | 0.2% E | | | |
| | 0.3% C | | | |
| g* | 0.1% B | chalking | 8 | 5.9 |
| | 0.2% E | | | |

| | | | | |
|---|---|---|---|---|
| * comparative example | | | | |

Samples containing the combination of flame retardant and sterically hindered amines of the present invention show no chalking, better gloss and distinctly less color change than samples with non-alkoxy sterically hindered amines.

### Example 2

Samples are prepared and subjected to accelerated weathering as described in Example 1.

### Formulation:

| | |
|---|---|
| 89 | parts by weight of polypropylene-ethylene copolymer (Novolen® PPG 1022), |
| 10 | parts by weight of a PE based flame retardant masterbatch containing 30% by weight of tris-(2,3-dibromopropyl)-isocyanurate and 15 % Sb₂O₃, |
| 1 | part by weight of TiO₂ and |
| 0.2 | parts by weight of blue pigment (Cromophtal blue 4GNP) |

and stabilizers as shown in the following table (amounts given in % by weight of the total formulation). The results are shown in the following table.

### Surface assessment after weathering for 2000 h

| Exp. # | Stabilizers | Visual | Gloss | △E |
|---|---|---|---|---|
| a* | None | chalking | 8 | 7.5 |
| c | 0.3% NOR7 | unchanged | 47 | 1.8 |
| | 0.1% NOR12 | | | |
| | 0.2% F | | | |
| | 0.3% C | | | |
| d* | 0.1% B | chalking | 12 | 6.4 |
| | 0.2% F | | | |
| g | 0.3% NOR2 | unchanged | 55 | 1.2 |
| | 0.1% NOR12 | | | |
| | 0.2% E | | | |
| | 0.3% C | | | |
| h* | 0.1% B | chalking | 14 | 7.1 |
| | 0.2% E | | | |

| | | | | |
|---|---|---|---|---|
| * comparative example | | | | |

### Example 3

Samples are prepared and subjected to accelerated weathering as described in Example 1.

### Formulation:

| | |
|---|---|
| 94 | parts by weight of polypropylene-ethylene copolymer (Novolen® PPG 1022), |
| 4 | parts by weight of tris(3-bromo-2,2-(bromomethyl)propyl) phosphate (flame retardant, FR 372 from Dead See Bromine), |
| 2 | parts by weight of Sb₂O₃ |
| 0.2 | parts by weight of blue pigment (Cromophtal blue 4GNP) |

and stabilizers as shown in the following table (amounts given in % by weight of the total formulation). The results are shown in the following table.

### Surface assessment after weathering for 2000 h

| Exp. # | Stabilizers | Visual | Gloss | △E |
|---|---|---|---|---|
| a | 0.3% NOR7 | unchanged | 64 | 1.4 |
| | 0.1% NOR12 | | | |
| | 0.2% F | | | |
| B* | 0.3% C | chalking | 15 | 3.9 |
| | 0.1% B | | | |
| | 0.2% F | | | |

| | | | | |
|---|---|---|---|---|
| * comparative example | | | | |

### Example 4

Samples are prepared and subjected to accelerated weathering as described in Example 1.

### Formulation:

| | |
|---|---|
| 87.5 | parts by weight of polypropylene-ethylene copolymer (Novolen® PPG 1022), |
| 8 | parts by weight of a PE based flame retardant masterbatch containing 40 % by weight of hexabromocyclododecane |
| 3.3 | parts by weight of a PE-based masterbatch containing 60 % by weight of Sb₂O₃, |
| 1 | part by weight of TiO₂ and |
| 0.2 | parts by weight of blue pigment (Cromophtal blue 4GNP) |

and stabilizers as shown in the following table (amounts given in % by weight of the total formulation). The results are shown in the following table.

### Surface assessment after weathering for 1000 h

| Exp. # | Stabilizers | Visual | Gloss | △E |
|---|---|---|---|---|
| a* | None | chalking | 11 | 5.2 |
| c | 0.3% NOR7 | unchanged | 38 | 2.3 |
| | 0.1% NOR12 | | | |
| | 0.2% F | | | |
| f | 0.3% NOR2 | Changed no chalking | 17 | 4.5 |
| | 0.1% NOR12 | | | |
| | 0.2% E | | | |

| | | | | |
|---|---|---|---|---|
| * comparative example | | | | |

## Claims

1. A flame retardant composition, which comprises
(A) A thermoplastic polymer substrate and
(B) An effective flame retarding amount of a synergistic mixture of
(i) At least one low molecular weight sterically hindered alkoxyamine stabilizer selected from the group consisting of
1-Cyclohexyloxy-2,2,6,6-tetramethyl-4-octadecylaminopiperidine;
bis(1-Octyloxy-2,2,6,6-tetramethylpiperidin-4-yl) sebacate;
2,4-bis[(1-Cyclohexyloxy-2,2,6,6-tetramethylpiperidin-4-yl)butylamino]-6-(2-hydroxyethylamino-s-triazine;
bis(1-Cyclohexyloxy-2,2,6,6-tetramethylpiperidin-4-yl) adipate;
2,4-bis[(1-Cyclohexyloxy-2,2,6,6-tetramethylpiperidin-4-yl)butylamino]-6-chloro-s-triazine;
1-(2-Hydroxy-2-methylpropoxy)-4-hydroxy-2,2,6,6-tetramethylpiperidine;
1-(2-Hydroxy-2-methylpropoxy)-4-oxo-2,2,6,6-tetramethylpiperidine;
1-(2-Hydroxy-2-methylpropoxy)-4-octadecanoyloxy-2,2,6,6-tetramethylpiperidine;
bis(1-(2-Hydroxy-2-methylpropoxy)-2,2,6,6-tetramethylpiperidin-4-yl) sebacate;
bis(1-(2-Hydroxy-2-methylpropoxy)-2,2,6 ,6-tetramethylpiperidin-4-yl) adipate; and
2,4-bis{N-[1-(2-Hydroxy-2-methy)propoxy)-2,2,6,6-tetramethylpiperldin-4-yl]-N-butylamino}-6-(2-hydroxyethylamino)-s-triazine;
(ii) At least one high molecular weight sterically hindered alkoxyamine stabilizer selected from the group consisting of
The reaction product of 2,4-bis[(1-cyclohexyloxy-2,2,6,6-piperidin-4-yl)butylamino]-6-chloro-s-triazine with N,N'-bis(3-aminopropyl)ethylenediamine) and
The compound of formula 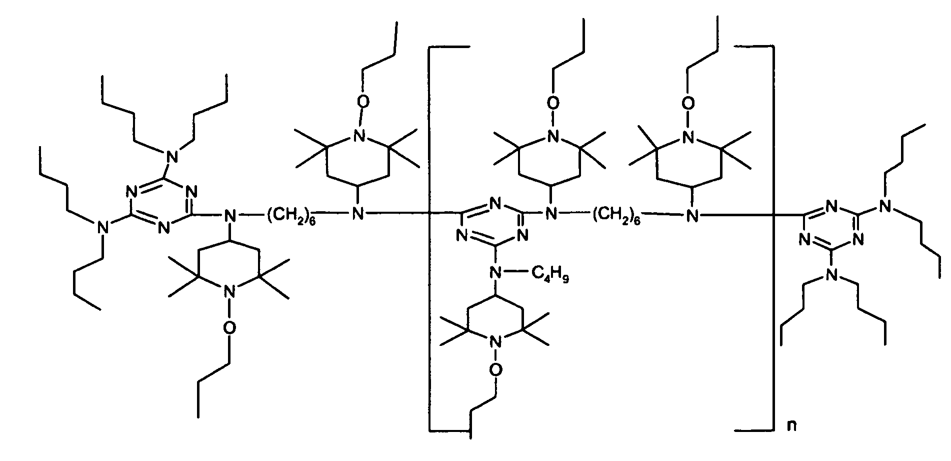 in which n is from 1 to 15;
(iii) At least one conventional flame retardant selected from the group consisting of Chloroalkyl phosphate esters,
Polybrominated diphenyl oxide,
Decabromodiphenyl oxide,
tris[3-Bromo-2,2-bis(bromomethyl)propyl] phosphate,
bis(2,3-Dibromopropyl ether) of bisphenol A,
Brominated epoxy resin,
Ethylene-bis(tetrabromophthalimide),
bis(Hexachlorocyclopentadieno)cyclooctane,
Chlorinated paraffins,
1,2-bis(Tribromophenoxy)ethane,
Tetrabromo-bisphenol A,
Ethylene bis-(dibromo-norbornanedicarboximide),
bis-(Hexachlorocyclopentadieno) cyclooctane,
tris-(2,3-Dibromopropyl)-isocyanurate,
Ethylene-bis-tetrabromophthalimide,
Triphenyl phosphate,
Ammonium polyphosphate,
Resorcinol diphosphate oligomer,
Melamine phosphates,
Melamine pyrophosphates and
Ethylenediamine diphosphate.

2. A composition according to claim 1 in which the stabilizers of components (i) and (ii), in total, are present in an amount from 0.05 to 20% by weight, based on the polymer substrate (A).

3. A composition according to claim 1 in which component (iii) is present in an amount from 0.5 to 45 % by weight, based on the polymeric substrate (A).

4. A composition according to claim 1 comprising a further component selected from the group consisting of pigments, dyes, plasticizers, phenolic antioxidants, thixotropic agents, leveling assistants, basic co-stabilizers, nitrone stabilizers, amine oxide stabilizers, benzofuranone stabilizers, UV absorbers, sterically hindered amines, metal passivators, metal oxides, organophosphorus compounds, hydroxylamines, further flame retardants, and mixtures thereof.

5. A composition according to claim 4 in which the further component is selected from the group consisting of phenolic antioxidants, calcium stearate, zinc stearate, phosphite and phosphonite stabilizers, benzofuranone stabilizers, UV absorbers of the 2-(2'-hydroxyphenyl)benzotriazole and 2-(2-hydroxyphenyl)-1,3,5-triazine classes, and sterically hindered amines.

6. A process for imparting light stability and flame retardancy to a thermoplastic polymer substrate, which process comprises adding to said polymer substrate a composition according to claim 1.

## Patentansprüche

1. Flammhemmende Zusammensetzung, die umfasst
(A) ein thermoplastisches Polymer-Substrat und
(B) eine wirksame flammhemmende Menge von einem synergistischen Gemisch von
(i) mindestens einem sterisch gehinderten Alkoxyamin-Stabilisator mit niedrigem Molekulargewicht, ausgewählt aus der Gruppe, bestehend aus
1-Cyclohexyloxy-2, 2, 6, 6-tetramethyl-4-octadecylaminopiperidin;
Bis-(1-octyloxy-2,2,6,6-tetramethyl-piperidin-4-yl)-sebacat;
2,4-Bis-[(1-cyclohexyloxy-2,2,6,6-tetramethyl-piperidin-4-yl)-butylamino]-6-(2-hydroxyethyl-aminos-triazin;
Bis-(1-cyclohexyloxy-2,2,6,6-tetramethyl-piperidin-4-yl)-adipat;
2,4-Bis-[(1-cyclohexyloxy-2,2,6,6-tetramethyl-piperidin-4-yl)-butylamino]-6-chlor-s-triazin;
1-(2-Hydroxy-2-methylpropoxy)-4-hydroxy-2,2,6,6-tetramethyl-piperidin;
1-(2-Hydroxy-2-methylpropoxy)-4-oxo-2,2,6,6-tetramethyl-piperidin;
1-(2-Hydroxy-2-methylpropoxy)-4-octadecanoyloxy-2,2,6,6-tetramethyl-piperidin;
Bis-(1-(2-hydroxy-2-methylpropoxy)-2,2,6,6-tetramethyl-piperidin-4-yl)-sebacat;
Bis-(1-(2-hydroxy-2-methylpropoxy)-2,2,6,6-tetramethyl-piperidin-4-yl)-adipat; und
2,4-Bis-{N-[1-(2-hydroxy-2-methylpropoxy)-2,2,6,6-tetramethyl-piperidin-4-yl]-N-butylamino)-6-(2-hydroxyethylamino)-s-triazin;
(ii) mindestens einem sterisch gehinderten Alkoxyamin-Stabilisator mit hohem Molekulargewicht, ausgewählt aus der Gruppe, bestehend aus dem Reaktionsprodukt von 2,4-Bis-[(1-cyclohexyloxy-2,2,6,6-piperidin-4-yl)-butylamino]-6-chlor-s-triazin mit N,N'-Bis-(3-aminopropyl)-ethylendiamin) und der Verbindung der Formel 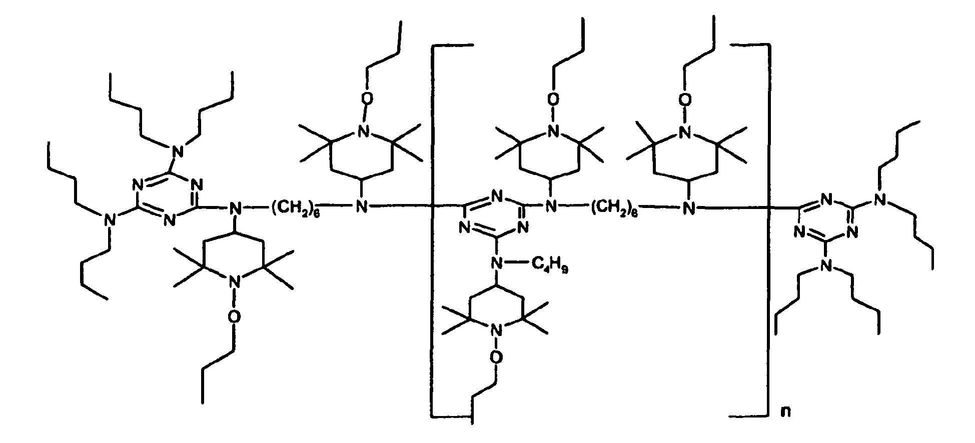 worin n 1 bis 15 ist;
(iii) mindestens einem herkömmlichen flammhemmenden Mittel, ausgewählt aus der Gruppe, bestehend aus
Chloralkyl-phosphatestern,
polybromiertem Diphenyloxid,
Decabromdiphenyl-oxid,
Tris-[3-brom-2,2-bis-(brommethyl)-propyl]-phosphat,
Bis-(2,3-dibrompropyl-ether) von Bisphenol A,
bromiertem Epoxid-Harz,
Ethylen-bis-(tetrabromphthalimid),
Bis-(hexachlor-cyclopentadieno)-cyclooctan,
chlorierten Paraffinen,
1,2-Bis-(tribromphenoxy)-ethan,
Tetrabrom-bisphenol A,
Ethylen-bis-(dibrom-norbornandicarboximid),
Bis-(hexachlor-cyclopentadieno)-cyclooctan,
Tris-(2,3-dibrompropyl)-isocyanurat,
Ethylen-bis-tetrabromphthalimid,
Triphenyl-phosphat,
Ammonium-polyphosphat,
Resorcin-diphosphat-Oligomer,
Melamin-phosphaten,
Melamin-pyrophosphaten und
Ethylendiamin-diphosphat.

2. Zusammensetzung nach Anspruch 1, worin die Stabilisatoren von Komponenten (i) und (ii) insgesamt in einer Menge von 0,05 bis 20 Gew.-%, bezogen auf das Polymer-Substrat (A), vorliegen.

3. Zusammensetzung nach Anspruch 1, worin Komponente (iii) in einer Menge von 0,5 bis 45 Gew.-%, bezogen auf das Polymer-Substrat (A), vorliegt.

4. Zusammensetzung nach Anspruch 1, umfassend eine weitere Komponente, ausgewählt aus der Gruppe, bestehend aus Pigmenten, Farbstoffen, Weichmachern, phenolischen Antioxidantien, thixotropen Mitteln, Nivellier-Hilfen, basischen Costabilisatoren, Nitron-Stabilisatoren, Aminoxid-Stabilisatoren, Benzofuranon-Stabilisatoren, UV-Absorptionsmitteln, sterisch gehinderten Aminen, Metallpassivatoren, Metalloxiden, Organophosphor-Verbindungen, Hydroxylaminen, weiteren flammhemmenden Mitteln, und Gemischen davon.

5. Zusammensetzung nach Anspruch 4, worin die weitere Komponente ausgewählt ist aus der Gruppe, bestehend aus phenolischen Antioxidantien, Calcium-stearat, Zink-stearat, Phosphit- und Phosphonit-Stabilisatoren, Benzofuranon-Stabilisatoren, UV-Absorptionsmitteln von den 2-(2'-Hydroxyphenyl)-benzotriazol- und 2- (2-Hydroxyphenyl)-1,3,5-triazin-Klassen, und sterisch gehinderten Aminen.

6. Verfahren zum Verleihen von Licht-Stabilität und Flammhemmung einem thermoplastischen Polymer-Substrat, wobei das Verfahren Zusetzen einer Zusammensetzung nach Anspruch 1 zu dem Polymer-Substrat umfasst.

## Revendications

1. Une composition ignifuge qui comprend
(a.) Un substrat polymérique thermoplastique et,
(b.) Une quantité ignifugeante efficace d'un mélange synergique de
(i) au moins un stabilisant alkoxyamine de faible poids moléculaire et avec empêchement stérique choisi parmi le groupe formé de :
1 -Cyclohexyloxy-2,2,6,6-tétraméthyl-4-octadécylaminopipéridine;
bis(1-Octytoxy-2,2,6,6-tétraméthylpipéridin-4-yl)sébacate; 2,4-bis[(1-Cyclohexyloxy-2,2,6,6-tétraméthylpipéridin-4-yl)butylamino]-6-(2-hydroxyéthylamino-s-triazine ;
bis (1-Cyclohexyloxy-2,2,6,6-tétraméthylpipéridin-4-yl)adipate ;
2,4-bis[(1-Cyclohexyloxy-2,2,6,6-tétraméthytpipéridin-4-yl)butylamino]-6-chloros-triazine ;
1-(2-Hydroxy-2-méthylpropoxy)-4-hydroxy-2,2,6,6-tétraméthylpipéridine ;
1-(2-Hydroxy-2-méthylpropoxy)-4-oxo-2,2,6,6-tétraméthylpipéridine ;
1-(2-Hydroxy-2-méthylpropoxy)-4-octadécanoyloxy-2,2,6,6-tétraméthylpipéridine ;
bis(1-(2-Hydroxy-2-méthylpropoxy)-2,2,6,6-tétraméthylpipéridin-4-yl) sébacate;
bis(1-(2-Hydroxy-2-méthylpropoxy)2,2,6,6-tétraméthylpipéridin-4-yl)adipate; et
2,4-bis{N-[1-(2-Hydroxy-2-méthylpropoxy)-2,2,6,6-tétraméthylpipéridin-4-yl]-N-butylamino}-6-(2-hydroxyéthylamino)-s-triazine ;
(ii) au moins un stabilisant alkoxyamine de haut poids moléculaire et avec empêchement stérique choisi parmi le groupe formé :
- du produit de la réaction entre la 2,4-bis[(1-cyclohexyloxy-2,2,6,6-pipéridin-4-yl)butylamino]-6-chloro-s-triazine et la N, N'-bis (3-aminopropyl) éthylènediamine) et
- du composé de formule 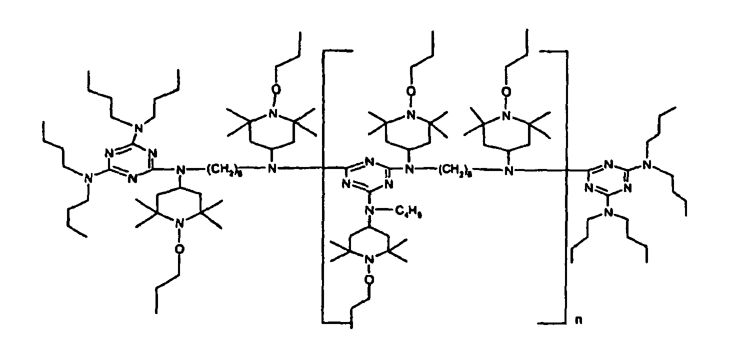
dans laquelle n va de 1 à 15 ;
(iii) au moins un composé ignifuge conventionnel choisi parmi le group formé de :
Esters de phosphate chloroalkyliques,
Diphényl oxyde polybromé,
Oxyde de décabromodiphényle,
Tris[3-Bromo-2,2-bis(bromomethyl)propyl]phosphate,
Bis(2,3-Dibromopropyl éther) de bisphénol A,
Résine époxy bromée,
Ethylène-bis(tétrabromophthalimide),
bis(Hexachlorocyclopentadiéno)cyclooctane,
Paraffines chlorées,
1,2-bis (Tribromophénoxy) éthane,
Tétrabromo-bisphénol A,
Ethylène bis-(dibromo-norbornanedicarboximide),
Bis-(hexachlorocyclopentadiéno) cyclooctane,
tris-(2,3-Dibromopropyl)-isocyanurate,
Ethylène-bis-tétrabromophthalimide,
Triphényl phosphate,
Ammonium polyphosphate,
Oligomère de résorcinol diphosphate,
Phosphates de mélamine,
Pyrophosphates de mélamine et,
Diphosphate d'éthylènediamine.

2. Une composition selon la revendication 1 dans laquelle les stabilisants des composants (i) et (ii), au total, sont présents en une quantité allant de 0,05 à 20 % en poids, basée sur le substrat polymérique (A).

3. Une composition selon la revendication 1 dans laquelle le composant (iii) est présent en une quantité allant de 0,5 à 45 % en poids basée sur le substrat polymérique (A).

4. Une composition selon la revendication 1 comprenant un composant supplémentaire choisi parmi le groupe formé de pigments, colorants, plastifiants, antioxydants phénoliques, agents thixotropiques, agents nivelants, co-stabilisants basiques, stabilisants nitrone, stabilisants oxyde d'amine, stabilisants benzofurannone, absorbeurs d'UV, amines avec empêchement stérique, agents passivants de métal, oxydes métalliques, composés organophosphorés, hydroxylamines, autres composés ignifuges et leurs mélanges.

5. Une composition selon la revendication 4 dans laquelle le composant supplémentaire est choisi parmi le groupe formé d'antioxydants phénoliques, de stéarate de calcium, de stéarate de zinc, de stabilisants phosphite et phosphonite, de stabilisants benzofurannone, d'absorbeurs d'UV des classes 2-(2'-hydroxyphényl)benzotriazole et 2-(2-hydroxyphényl)-1,3,5-triazine et d'amines avec empêchement stérique.

6. Un procédé pour communiquer une stabilité à la lumière et une ignifugation d'un substrat polymérique thermoplastique, procédé comprenant l'ajout d'une composition selon la revendication 1 audit substrat polymérique.
